# EUROPEAN PATENT SPECIFICATION

(11) **EP 1 884 605 B1**
(45) Date of publication and mention of the grant of the patent: **18.03.2009**
(21) Application number: 07015184.0
(22) Date of filing: 02.08.2007
(51) Int. Cl.: E04C 3/08, B23K 33/00, F16L 41/08

(54) **Truss**
Träger
Support

(30) Priority: 03.08.2006 NL 1032270
(43) Date of publication of application: 06.02.2008
(73) Proprietor: PROLYTE BEHEER B.V., 9351 PA Leek (NL)
(72) Inventor: Hendriks, Marc, 9717 JP Groningen (NL); Stuut, Johann Otto Rudolf, 9934 LZ Delfzijl (NL)
(74) Representative: Jilderda, Anne Ayolt

(56) References cited:
- GB-A- 561 143
- US-A1- 2004 187 426

## Description

The invention relates to a truss comprising at least two at least substantially tubular bodies, which tubular bodies are attached to each other in pairs by means of at least one bar, wherein the bar is attached on either side to the respective tubular bodies at the position of an attachment zone, wherein the respective tubular bodies have a flat attaching surface at the position of the attachment zone, and wherein the bar is hollow.

Such a truss is known from the American patent application with publication number 2004/0.187.426 A1. The known truss is applied as part of a truss construction in which a number of trusses of modular form are mutually connected in a manner such that they can be disassembled. Scaffolds, roofing constructions, support frames, portals and other constructions can thus be realized which are used particularly for stand construction and theatre construction, for instance as lighting ceilings, support constructions and scenic constructions for concerts, fashion shows, presentations, trade fair stands and the like, for instance for mounting thereon of pieces of scenery, curtains, speakers, spotlights, stages and the like. The modular embodiment of trusses together with their relatively rapid and simple assembly and disassembly make such truss constructions particularly suitable for temporary use during events. Truss constructions of a more permanent nature can however also be provided using trusses.

The known truss has the drawback that welding of the bars to the tubular bodies can be a difficult job. This is related to the fact that air present in the hollow bar is heated during welding, whereby this air has a tendency to expand. A weld can thus burst apart as a result of an increased air pressure inside the bar. Said drawback is increased further exacerbated because, in order to manufacture a truss, a relatively large number of welded connections must be realized between the tubular bodies and the bars.

The invention has for its object, among others, to provide a truss of the type described in the preamble in which this drawback is obviated in at least significant measure.

For this purpose a truss of the type stated in the preamble has the feature according to the invention that the flat attaching surface has a recess, wherein the recess forms a passage from an inner side of the bar to an outer side of the bar. Heated air present on the inner side of the bar can escape to the outer side of the bar via the recess during welding. This prevents the weld bursting apart as a result of an increased air pressure inside the bar.

A preferred embodiment of the truss according to the invention is characterized in that the recess is groove-like. A groove-like recess can be arranged by extrusion of the tubular body so that the arranging thereof entails no further costs and makes no additional processing of the tubular body necessary. A particular embodiment of the truss according to the invention is characterized in that the groove-like recess extends over substantially the full length of a tubular body. At the position of the groove-like recess a bar can hereby be welded to the tubular body at any desired location along the length of this latter.

A further preferred embodiment of the truss according to the invention is
characterized in that the flat attaching surface is a flattened side of a tubular body. Such a tubular body can be manufactured relatively easily and inexpensively by means of extrusion. The flattened side moreover provides great freedom in respect of the possible positions where the bars can be welded to the tubular body. This freedom is increased even further by a further preferred embodiment of the truss which is
characterized according to the invention in that the flattened side extends over substantially a full length of the tubular body.

A particular embodiment of the truss according to the invention is characterized in that the tubular body is provided with two flattened sides. Bars are then welded to the one flattened side in order to connect the tubular body to a first other tubular body, and bars are welded to the other flattened side in order to connect the tubular body to a second other tubular body. The tubular body can of course also be provided with only one flattened side, or with more than two flattened sides.

A preferred embodiment of the truss according to the invention is characterized in that a substantially tubular body has an external radius defining a circumscribed circle, and that the flat attaching surface extends within the circumscribed circle. Arranging for instance clamps or the like round the tubular body is thus not impeded, or only slightly so, by the flat attaching surface. In this way the tubular body largely retains its functionality.

The invention will now be further elucidated on the basis of an exemplary embodiment and an accompanying drawing. In the drawing:
- Figure 1: shows a perspective view of an exemplary embodiment of the truss according to the invention.
- Figure 2: shows a cross-section of a tubular body of the truss of figure 1.
The figures are otherwise purely schematic and not drawn to scale. For the sake of clarity some dimensions in particular may be exaggerated to a greater or lesser extent. Corresponding parts are designated as far as possible in the figures with the same reference numeral.

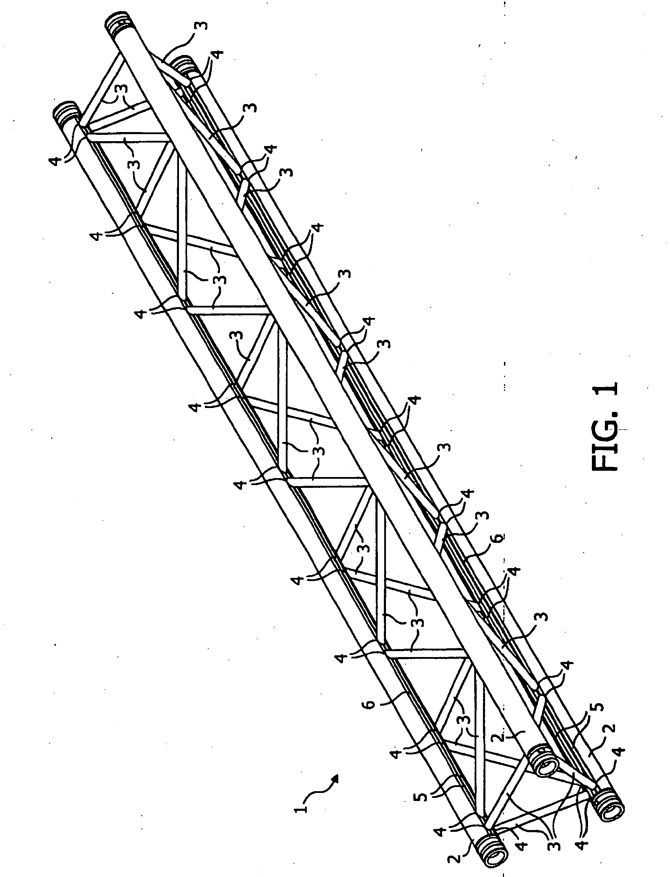

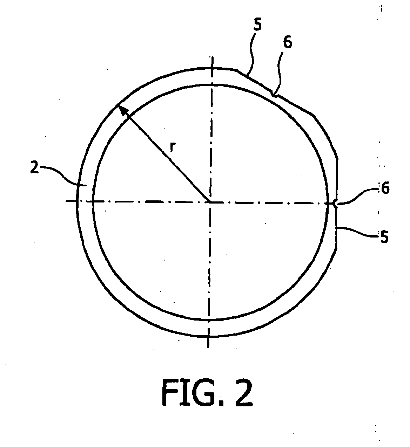

The truss 1 with a triangular cross-section shown in figure 1 has three parallel tubular bodies 2 which are attached to each other in pairs by means of bars 3. Each tubular body 2 has two flattened sides 5 extending in a longitudinal direction, as also shown in figure 2. The flattened sides 5 extend here over substantially a full length of tubular bodies 2. Each flattened side 5 is provided with a groove-like recess 6 which extends in longitudinal direction and extends over substantially the full length of a tubular body 2. Each tubular body 2 has an external radius r which defines a circumscribed circle. The flattened sides 5 extend within the circumscribed circle.

Bars 3 are welded on either side to tubular bodies 2 at the position of attachment zones 4. Attachment zones 4 are herein provided on the flattened sides 5 of tubular bodies 2 so that attachment zones 4 form a flat attaching surface for bars 3.

Because attachment zones 4 have flat attaching surfaces for bars 3, the bars can connect directly to the attaching surfaces over their full diameter, without gaps. Bars 3 can hereby be welded in rapid and simple manner to the attaching surfaces. Automatic welding of bars 3 to tubular bodies 2 is moreover simplified considerably, since it is required for this purpose that the surfaces for welding connect closely to each other. It is not necessary to give the outer ends of bars 3 a curved shape by means of grinding in order to allow bars 3 to connect without gaps to tubular bodies 2. A significant increase in efficiency is thus achieved in the manufacture of trusses 1.

When bars 3 take a hollow form, air present inside bars 3 will heat up during welding thereof, whereby this air will tend to expand. A possibility for expansion is provided by groove 6, since air can flow from an inner side of a bar 3 to an outer side of bar 3 via groove 6. The weld is thus prevented from bursting apart during welding of bar 3 as a result of an increased air pressure inside bar 3.

The tubular bodies 2 with flattened sides 5 and grooves 6 can be manufactured in simple and relatively inexpensive manner by means of extrusion.

Although the invention has been further elucidated with reference to only one or several embodiments, it will be apparent that the invention is by no means limited thereto. On the contrary, many other variations and embodiments are possible within the scope of the invention, as defined by the claims, for the person with ordinary skill in the art. It is for instance possible to use other attaching techniques instead of welding in order to connect the bars to the tubular bodies. Glueing or soldering can for instance be envisaged. The trusses can further have a section other than a triangular section, for instance square, rectangular etc.

## Claims

1. Truss comprising at least two at least substantially tubular bodies (2), which tubular bodies (2) are attached to each other in pairs by means of at least one bar (3), wherein the bar (3) is attached on either side to the respective tubular bodies (2) at the position of an attachment zone, wherein the respective tubular bodies (2) have a flat attaching surface (5) at the position of the attachment zone, and wherein the bar is hollow, **characterized in that** the flat attaching surface has a recess (6), wherein the recess forms a passage from an inner side of the bar (3) to an outer side of the bar (3).

2. Truss as claimed in claim 1, **characterized in that** the recess (6) is groove-like.

3. Truss as claimed in claim 2, **characterized in that** the groove-like recess (6) extends over substantially the full length of a tubular body (2).

4. Truss as claimed in claim 1 2 or 3, **characterized in that** the flat attaching surface (5) is a flattened side of one of said tubular bodies (2).

5. Truss as claimed in claim 4, **characterized in that** the flattened side extends over substantially a full length of the tubular body (2).

6. Truss as claimed in claim 4 or 5, **characterized in that** the tubular body (2) is provided with two flattened sides.

7. Truss as claimed in one or more of the foregoing claims, **characterized in that** a substantially tubular body (2) has an external radius defining a circumscribed circle, and that the flat attaching surface (5) extends within the circumscribed circle.

## Patentansprüche

1. Träger, mit zumindest zwei zumindest im Wesentlichen rohrförmigen Körpern (2), wobei die rohrförmigen Körper (2) mittels zumindest einer Strebe (3) paarweise miteinander verbunden sind, wobei die Strebe (3) beidseits an den jeweiligen rohrförmigen Körpern (2) an der Position einer Befestigungszone befestigt ist, wobei die jeweiligen rohrförmigen Körper (2) eine flache Befestigungsfläche (5) an der Position der Befestigungszone aufweisen, und wobei die Strebe hohl ist, **dadurch gekennzeichnet, dass** die flache Befestigungsfläche eine Ausnehmung (6) aufweist, wobei die Ausnehmung einen Durchgang von einer Innenseite der Strebe (3) zu einer Außenseite der Strebe (3) bildet.

2. Träger nach Anspruch 1, **dadurch gekennzeichnet, dass** die Ausnehmung (6) nutenförmig ist.

3. Träger nach Anspruch 2, **dadurch gekennzeichnet, dass** die nutenförmige Ausnehmung (6) sich über im Wesentlichen die volle Länge eines rohrförmigen Körpers (2) erstreckt.

4. Träger nach Anspruch 1, 2 oder 3, **dadurch gekennzeichnet, dass** die flache Befestigungsfläche (5) eine abgeflachte Seite eines der rohrförmigen Körper (2) ist.

5. Träger nach Anspruch 4, **dadurch gekennzeichnet, dass** die abgeflachte Seite sich über im Wesentlichen eine volle Länge des rohrförmigen Körpers (2) erstreckt.

6. Träger nach Anspruch 4 oder 5, **dadurch gekennzeichnet, dass** der rohrförmige Körper (2) mit zwei abgeflachten Seiten versehen ist.

7. Träger nach einem oder mehreren der vorhergehenden Ansprüche, **dadurch gekennzeichnet, dass** ein im Wesentlichen rohrförmiger Körper (2) einen Außenradius aufweist, der einen Umkreis definiert, und dass sich die flache Befestigungsfläche (50) innerhalb des Umkreises erstreckt.

## Revendications

1. Support comprenant au moins deux corps (2) au moins substantiellement tubulaires, lesquels corps tubulaires (2) sont fixés l'un à l'autre en paires au moyen d'au moins une barre (3) ; dans lequel la barre (3) est fixée de chaque côté aux corps tubulaires (2) respectifs à la position d'une zone de fixation, dans lequel les corps tubulaires (2) respectifs ont une surface de fixation plate (5) à la position de la zone de fixation, et dans lequel la barre est creuse, **caractérisé en ce que** la surface de fixation plate a un évidement (6), dans lequel l'évidement forme un passage d'un côté interne de la barre (3) à un côté externe de la barre (3).

2. Support selon la revendication 1, **caractérisé en ce que** l'évidement (6) est en forme de rainure.

3. Support selon la revendication 2, **caractérisé en ce que** l'évidement (6) en forme de rainure s'étend substantiellement sur toute la longueur d'un corps tubulaire (2).

4. Support selon la revendication 1, 2 ou 3, **caractérisé en ce que** la surface de fixation plate (5) est un côté aplati de l'un desdits corps tubulaires (2).

5. Support selon la revendication 4, **caractérisé en ce que** le côté aplati s'étend substantiellement sur toute la longueur du corps tubulaire (2).

6. Support selon la revendication 4 ou 5, **caractérisé en ce que** le corps tubulaire (2) est pourvu de deux côtés aplatis.

7. Support selon l'une ou plusieurs des revendications précédentes, **caractérisé en ce qu'**un corps (2) sensiblement tubulaire a un rayon externe définissant un cercle circonscrit, et **en ce que** la surface de fixation plate (5) s'étend à l'intérieur du cercle circonscrit.
